## Europäisches Patentamt
## European Patent Office
## Office européen des brevets

(11) Veröffentlichungsnummer: **0 264 006**
**A1**

# (12) EUROPÄISCHE PATENTANMELDUNG

(21) Anmeldenummer: **87113921.8**

(22) Anmeldetag: **23.09.87**

(51) Int. Cl.⁴ **H04M 3/42** , G06F 12/14

(30) Priorität: **29.09.86 DE 3632976**

(43) Veröffentlichungstag der Anmeldung:
**20.04.88 Patentblatt 88/16**

(84) Benannte Vertragsstaaten:
**AT CH DE FR GB IT LI NL**

(71) Anmelder: **Siemens Aktiengesellschaft Berlin und München**
**Wittelsbacherplatz 2**
**D-8000 München 2(DE)**

(72) Erfinder: **Van Ow, Hans-Peter, Dr. Ing.**
**Starnberger Strasse 11**
**D-8000 München 71(DE)**

(54) **Kommunikationssystem mit durch Programmsubmodule eines Systemsteuerprogrammes einleitbaren Kommunikationssonderdiensten.**

(57) Das Systemsteuerprogramm weist die Programmsubmodule (PS) für alle systemimmanenten Kommunikationssonderdienste und ein Speichersegment (SB1, SB2) auf, in dem eine Information für die betriebstechnische Freigabe oder Sperrung des jeweiligen Kommunikationssonderdienstes enthalten ist und das bei jeder Einleitung eines Kommunikationssonderdienstes durch Betätigung einer Funktionstaste oder einer Wähleinrichtung im Sinne einer Abfrage der entsprechenden Informationen ansteuerbar ist.

## Kommunikationssystem mit durch Programmsubmodule eines Systemsteuerprogrammes einleitbaren Kommunikationssonderdiensten

Die Erfindung betrifft ein Kommunikationssystem mit einer zentralen Vermittlungssteuerung zur wahlweisen Verbindung von Endgeräten mit Wähleinrichtungen und Funktionstasten mittels derer durch Programmsubmodule eines Systemsteuerprogrammes steuerbare Kommunikationssonderdienste, z. B. Makeln, Direktruf, Anrufwiederholung, einleitbar sind, wobei das Systemsteuerprogramm die Programmsubmodule für zumindest nahezu alle systemimmanenten Kommunikationssonderdienste und ein Speichersegment enthält, in dem für jeden dieser Kommunikationssonderdienste eine individuelle Information über dessen betriebstechnische Freigabe oder Sperrung abgespeichert ist.

Die Zahl solcher Kommunikationssonderdienste ist insbesondere in zeitgemäßen ISDN-Kommunikationssystemen im Hinblick auf die verschiedenen verarbeitbaren Kommunikationsarten - Sprache, Teletex, Daten, Facsimile - und insbesondere bei Vorsehen entsprechend komfortabler Endgeräte mit einer Vielzahl von Funktionstasten, denen darüberhinaus frei programmierbar oder in unterschiedlichen Kommunikationszuständen unterschiedliche Bedeutungen zuteilbar sind, sehr groß. Insbesondere für die Kommunikationsart "Sprache" sind neben den oben angegebenen Sonderdiensten viele weitere, wie z. B. persönliche Gebührenerfassung, Kurzwahl, automatischer Rückruf, Anrufumleitung, Anrufschutz, Konferenzgespräch, elektronischer Briefkasten usw., bekannt. Die einzelnen Steuerprozeduren für die Durchführung dieser Kommunikationssonderdienste sind in Programmsubmodulen koordiniert, ohne daß deshalb in jeder bei einem Betreiber eines solchen Kommunikationssystems installierten Anlage sämtliche Kommunikationssonderdienste aktivierbar sein sollen.

Aus "INTERNATIONAL CONFERENCE ON PRIVATE ELECTRONIC SWITCHING SYSTEMS, 10. - 12. April 1978, Seiten 64 - 69, London, GB; J. SIDWELL: "K1 - A small stored program controlled PABX)" Seite 65, Abschnitt: "The central processing unit" ist bekannt, in einem Kommunikationssystem den gesamten Umfang der systemimmanenten Kommunikationssonderdienste bzw. zumindest den größten Teil desselben zu implementieren, dem Kunden bzw. Betreiber des Kommunikationssystems aber nur die gewünschten Kommunikationssonderdienste zur Verfügung zu stellen. Dies geschieht durch entsprechendes Setzen eines Bit je Kommunikationssonderdienst im Speichersegment.

Die der Erfindung zugrundeliegende Aufgabe besteht darin, der für die einzelnen bei Kunden installierten Kommunikationssysteme unterschiedlichen Zahl und Arten der Kommunikationssonderdienste nicht nur steuerungstechnisch - wie bekannt - derart Rechnung zu tragen, daß eine einfache individuelle Anpassung der Kommunikationssysteme an die unterschiedlichen Kundenwünsche erfolgt, sondern auch eine möglichst geringfügige individualisierte Einflußnahme durch die systemindividuelle Zahl und Art der Kommunikationssonderdienste auf das Systemsteuerprogramm zu erzielen. Dies wird dadurch erreicht, daß das Speichersegment bei jeder Einleitung eines Kommunikationssonderdienstes durch Funktionstastenbetätigung mittels des zugeordneten Programmsubmoduls und bei jeder Einleitung durch Betätigen der Wähleinrichtung mittels als Ergebnis einer Wahlbewertungsprozedur erzeugter Kennzahlpunktinformationen jeweils im Sinne einer Abfrage der diesem Kommunikationssonderdienst entsprechenden Information ansteuerbar ist und daß in Abhängigkeit vom Informationsinhalt kommunikationssonderdienstentsprechende Steuerschritte eingeleitet oder unterdrückt werden.

Der wesentliche Vorteil des mit der Erfindung realisierten Individualisierungskonzeptes für Kommunikationssysteme ist darin zu sehen, daß die logische Struktur des Systemsteuerprogramms für sämtliche sowohl in bezug auf die verwendete Kommunikationsart als auch die Zahl und Art der aktivierten Kommunikationssonderdienste unterschiedlichen Kommunikationssysteme gleichbleibt. Die eigentliche Individualisierung der Kommunikationssysteme erfolgt im Rahmen der Betriebstechnik bei der Ersteinrichtung des Kommunikationssystems, während die Abfrage des Speichersegmentes für alle unterschiedlichen Kommunikationssysteme in die eigentliche Vermittlungssteuerung mit dem ihr zugrundeliegenden Systemsteuerprogramm funktionell eingebunden ist. Damit ist zugleich der wesentliche Vorteil verbunden, daß auch spätere Änderungen im Kommunikationssystem bezüglich der Kommunikationssonderdienste derart, daß z. B. weitere Kommunikationssonderdienste hinzutreten oder ursprünglich eingerichtete Kommunikationssonderdienste entfallen, durch eine einfache - vom Wartungspersonal durchzuführende - Änderung des Speicherinhaltes des Speichersegmentes erfolgen können. Dies bietet zugleich die Möglichkeit, die aktive Ansteuerung des Speichersegmentes derart prozedural auszugestalten, daß ein Mißbrauch, insbesondere in dem Sinne, daß der Betreiber des Kommunikationssystems zusätzliche Kommunikationssonderdienste unautorisiert aktiviert, unterbunden werden kann. In diesem Zusammenhang sieht eine vorteilhafte Weiterbildung der Erfindung vor, daß das Speichersegment als reiner Lesespeicher vom Systemsteuerprogramm und als Schreib-Lesespeicher von einem Betriebstechnik-Steuerprogramm ansteuerbar ist.

Solche Kommunikationsdienste, die zur Regelausstattung der entsprechenden Kommunikationssysteme gehören, können von einer entsprechenden Prüfung ausgenommen werden; es kann zuweilen aber auch im Hinblick auf die Vereinheitlichung der Steuerprozeduren sinnvoll sein, auch solche Kommunikationsdienste in gleicher Weise wie die Kommunikationssonderdienste zu behandeln und ebenfalls entsprechende Informationen im Speichersegment abzulegen.

Um das übliche Verfahren der Wahlberechtigung mittels einer Prüfung der gewählten Ziffern und der Erzeugung eines sogenannten Kennzahlpunktes als Ergebnis dieser Prüfung möglichst unbeeinflußt zu lassen, andererseits aber die durch Funktionstastenbetätigung erzeugten Signalcodes nicht in entsprechende Kennzahlpunktinformationen umsetzen zu müssen, wird gemäß einer vorteilhaften Ausgestaltung der Erfindun das Speichersegment in zwei Speicherbereiche aufgeteilt, von denen das eine mittels der Programmsubmodule und das andere mittels der Kennzahlpunktinformationen ansteuerbar ist. In diesem Zusammenhang ist als vorteilhaft anzusehen, daß der eine Speicherbereich je Kommunikationssonderdienst ein Bit aufweist und der andere Speicherbereich unter jeder kennzahlpunktentsprechenden Adresse bei betriebstechnischer Freigabe des entsprechenden Kommunikationssonderdienstes die entsprechende Kennzahlpunktinformation enthält. Damit wird einerseits eine minimale Speicherkapazität, Lesezeit und Verarbeitungsdauer ermöglicht und andererseits ohne zusätzliche Umwerteprozeduren ein systemgerechtes Weiterverarbeiten von Kennzahlpunktinformationen ermöglicht.

Eine weitere vorteilhafte Ausgestaltung der Erfindung beruht darauf, daß im Rahmen verschiedener Kommunikationssonderdienste spezielle Steuerschritte nicht nur bei Betätigen einer Funktionstaste oder in unmittelbarem Anschluß an die Eingabe entsprechender Wählziffern erfolgen, sondern daß in beliebigen Zuständen des Kommunikationssystems Programmverzweigungen im Systemsteuerprogramm möglich sind, deren Durchführung im Rahmen des der Erfindung zugrundeliegenden Individualisierungskonzeptes davon abhängig gemacht werden sollte, ob der entsprechende Kommunikationssonderdienst aktiviert ist oder nicht. Beispiele für solche Steuerprozeduren sind z. B. die individuelle Gebührenanzeige am Ende eines Gespräches oder die Übersendung eines Signals vom angerufenen Teilnehmer an den rufenden Teilnehmer im Falle der Einrichtung des Kommunikationssonderdienstes "Direktruf". Es wird vorgesehen, daß bei durch das Systemsteuer programm vorgegebenen Programmabzweigungen in kommunikationssonderdienstimmanenten Steuerprozeduren ebenfalls das Speichersegment im Sinne der Beeinflussung der weiteren programmgesteuerten Steuerschritte abfragbar ist.

Eine weitere Ausgestaltung der Erfindung bezieht sich auf die Verarbeitung mehrerer Kommunikationsarten - z. B. Sprache, Teletex, Daten, Facsimile - in einem Kommunikationssystem, insbesondere ISDN-Kommunikationssystem, und sieht in diesem Zusammenhang vor, daß für jede im Kommunikationssystem verarbeitbare Kommunikationsart ein individuelles Speichersegment vorgesehen ist, von denen eines die den in wenigstens einer anderen Kommunikationsart ebenfalls realisierbaren Kommunikationssonderdiensten zugeordneten Informationen über deren betriebstechnische Freigabe oder Sperrung enthält. Dies wird in der Praxis zumeist für die Kommunikationsart Sprache zutreffen, die als ergänzende Kommunikationsart bei bestimmten Informationsübertragungen, wie z. B. Daten und Facsimile, hinzutritt.

Die Erfindung wird im folgenden anhand eines ihre prinzipielle Funktion veranschaulichenden Schemadarstellung erläutert.

Die Einleitung von Kommunikationssonderdiensten kann entweder bei Auftreten eines Wählcodes $wc$ durch entsprechende Betätigen von Wähleinrichtungen, bei Auftreten eines Funktionscodes $fc$ bei Betätigen entsprechender Funktionstasten sowie bei Auftreten von Programmbefehlen $pb$ im Zuge von Programmabläufen eingeleitet werden. Der Wählcode $wc$ wird in üblicher Weise einer Wahlbewertungsprozedur $WB$ unterworfen, als deren Ergebnis Kennzahlpunktinformationen $kp$ abgegeben werden, die in ihrer Gesamtheit die Gesamtheit aller Kommunikationssonderdienste erfassen. Mit der Kennzahlpunktinformation $kp$ wird unter Zuhilfenahme einer Speicherverwaltung $SV2$ ein Speicherbereich $SB2$ mit einer der Anzahl der möglichen Kennzahlpunkt informationen entsprechenden Anzahl von Speicherplätzen angesteuert. In den einzelnen Speicherzellen des Speicherbereiches $SB2$ ist jeweils entweder die mit der Adresse der Speicherplätze übereinstimmende Kennzahlpunktinformation, beispielsweise "Anrufumleitung" KZP AU oder "Anrufschutz" KZP AS, oder eine andere Information "Nicht Möglich" NM, die die Nichtfreigabe des entsprechenden Kommunikationssonderdienstes repräsentiert, abgespeichert.

Signale im Funktionscode $fc$ bzw. in Form von Programmbefehlen $pb$ werden mittels der Programmsubmodule $PS$ zu Adreßsignalen $as$ umgewertet, wobei die Adreßsignale $as$ derart gebildet sind, daß mit ihnen bzw. unter Mitwirkung der Speicherverwaltung SV1 der Speicherplatz eines Speicherbereiches SB1 angesteuert wird, der dem entsprechenden Kommunikationssonderdienst entspricht. Durch Abspeicherung lediglich eines Bits, d. h. durch "0" oder "1" wird die betriebstechnische Freigabe oder Sperrung des entsprechenden Kommunikationssonderdienstes wiedergegeben.

Durch Ausgänge ss1 bzw. ss2 der Speicherverwaltungen SV1 bzw. SV2 ist schematisch angedeutet, daß die aus den jeweiligen Speicherbereichen SB1, SB2 ausgelesene Information über die betriebstechnische Freigabe oder Sperrung des einzuleitenden Kommunikationssonderdienstes an die eigentliche - nicht dargestellte - Systemsteuerung abgegeben werden. Die Einspeicherung der Informationen bzw. ihre Änderung erfolgt über mittels der Systembetriebstechnik BT eingeleitete Programmprozeduren.

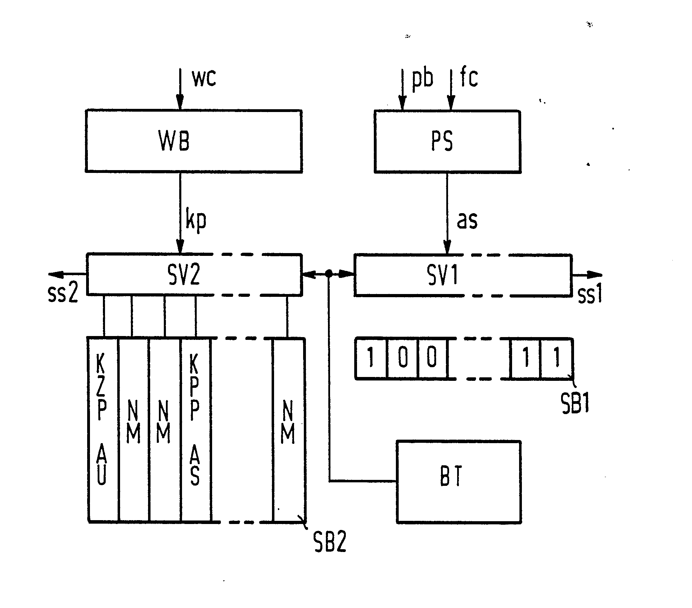

## Ansprüche

1. Kommunikationssystem mit einer zentralen Vermittlungssteuerung zur wahlweisen Verbindung von Endgeräten mit Wähleinrichtungen und Funktionstasten, mittels derer durch Programmsubmodule (PS) eines Systemsteuerprogramms gesteuerte Kommunikationssonderdienste, z. B. Makeln, Direktruf, Anrufwiederholung, einleitbar sind, wobei das Systemsteuerprogramm die Programmsubmodule (PS) für zumindest nahezu alle systemimmanenten Kommunikationssonderdienste und ein Speichersegment (SB1, SB2) enthält, in dem für jeden dieser Kommunikationssonderdienste eine individuelle Information über dessen betriebstechnische Freigabe oder Sperrung abgespeichert ist,
**dadurch gekennzeichnet,**
daß das Speichersegment (SB1, SB2) bei jeder Einleitung eines Kommunikationssonderdienstes durch Funktionstastenbetätigung mittels des zugeordneten Programmsubmoduls (PS) und bei jeder Einleitung durch Betätigen der Wähleinrichtung mittels als Ergebnis einer Wahlbewertungsprozedur (WB) erzeugter Kennzahlpunktinformationen (kp) jeweils im Sinne einer Abfrage der diesem Kommunikationssonderdienst entsprechenden Information ansteuerbar ist und daß in Abhängigkeit vom Informationsinhalt kommunikationssonderdienstentsprechende Steuerschritte eingeleitet oder unterdrückt werden.

2. Kommunikationssystem nach Anspruch 1,
**dadurch gekennzeichnet,**
daß für jede im Kommunikationssystem verarbeitbare Kommunikationsart (z. B. Sprache, Teletex, Daten, Facsimile) ein individuelles Speichersegment vorgesehen ist, von denen eines die den in wenigstens einer anderen Kommunikationsart ebenfalls realisierbaren Kommunikationssonderdiensten zugeordneten In formationen über deren betriebstechnische Freigabe oder Sperrung enthält.

3. Kommunikationssystem nach Anspruch 1 oder 2,
**dadurch gekennzeichnet,**
daß das Speichersegment (SB1, SB2) als reiner Lesespeicher vom Systemsteuerprogramm und als Schreib-Lesespeicher von einem Betriebstechnik-Steuerprogramm (BT) ansteuerbar ist.

4. Kommunikationssystem nach einem der Ansprüche 1 bis 3,
**dadurch gekennzeichnet,**
daß das Speichersegment in zwei Speicherbereiche (SB1, SB2) aufgeteilt ist, von denen das eine mittels der Programmsubmodule (PS) und das andere mittels der Kennzahlpunktinformationen (kp) ansteuerbar ist.

5. Kommunikationssystem nach Anspruch 4,
**dadurch gekennzeichnet,**
daß der eine Speicherbereich (SB1) je Kommunikationssonderdienst ein Bit aufweist und der andere Speicherbereich (SB2) unter jeder kennzahlpunktentsprechenden Adresse bei betriebstechnischer Freigabe des entsprechenden Kommunikationssonderdienstes die entsprechende Kennzahlpunktinformation enthält.

6. Kommunikationssystem nach einem der Ansprüche 1 bis 5,
**dadurch gekennzeichnet**
daß bei durch das Systemsteuerprogramm vorgegebenen Programmverzweigungen in kommunikationssonderdienstimmanenten Steuerprozeduren ebenfalls das Speichersegment (SB1) im Sinne der Beeinflussung der weiteren programmgesteuerten Steuerschritte abfragbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | INTERNATIONAL CONFERENCE ON PRIVATE ELECTRONIC SWITCHING SYSTEMS, 10.-12. April 1978, Seiten 64-69, London, GB; J. SIDWELL: "K1 - A small stored program controlled PABX" * Seite 65, Abschnitt: "The central processing unit" * --- | 1,3 | H 04 M 3/42 G 06 F 12/14 |
| A | IBM TECHNICAL DISCLOSURE BULLETIN, Band 22, Nr. 5, Oktober 1979, Seiten 2009-2010, New York, US; A.J. SUTTON et al.: "Processors sharing and partitioning of main storage in the MP system" * Insgesamt * --- | 1 | |
| A | DE-A-3 129 941 (SIEMENS) * Zusammenfassung * --- | 1 | |
| A | WO-A-8 402 206 (WESTERN) * Seite 2, Zeilen 1-18 * ----- | 1 | RECHERCHIERTE SACHGEBIETE (Int. Cl.4) H 04 M H 04 Q G 06 F |

Der vorliegende Recherchenbericht wurde für alle Patentansprüche erstellt

| Recherchenort | Abschlußdatum der Recherche | Prüfer |
|---|---|---|
| DEN HAAG | 06-01-1988 | VANDEVENNE M.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)